# EUROPÄISCHE PATENTANMELDUNG

(11) **EP 2 082 650 A1**
(43) Veröffentlichungstag der Anmeldung: **29.07.2009**
(21) Anmeldenummer: 09405006.9
(22) Anmeldetag: 13.01.2009
(51) Int. Cl.: A23L 2/02

(54) **Fruchtsaftgetränk auf Euterpe Oleracea-Basis**

(30) Priorität: 28.01.2008 CH 1202008
(71) Anmelder: Oroverde GmbH, 8589 Sitterdorf (DE)
(72) Erfinder: Jaisli, Fritz K., 8589 Sitterdorf (CH); Neuenschwander, Beat, 8032 Zürich (CH)
(74) Vertreter: Liebetanz, Michael

(57) **Zusammenfassung**

Ein Fruchtsaftgetränk auf Basis der Frucht der Euterpe Oleracea umfasst, in Prozentsätzen auf die einfache Saftstärke bezogen: Saft der Euterpe Oleracea mit 8% bis 12%, Apfelsaft mit 7% bis 10%, Birnensaft mit 3% bis 5%, Limettensaft mit 2.5% bis 5% und einen Passionsfruchtanteil von 1.5% bis 4%. Ferner enthält dieser Fruchtsaft Acerolasaft mit 6% bis 10% und Orangensaft mit 3% bis 5% und schafft so ein Aromaprofil, welches einem Fruchtsaft entspricht, der Camu Camu- und Araza-Fruchtanteile aufweist.

## Beschreibung

### Technisches Gebiet der Erfindung

Die Erfindung betrifft ein Fruchtsaftgetränk auf der Basis von Früchten der Kohlpalme (Euterpe Oleracea).

### Stand der Technik

Die Anmelderin vertreibt in der Schweiz ein Fruchtsaftgetränk auf der Basis der Frucht der Kohlpalme, deren wissenschaftlicher Name der Art Euterpe Oleracea ist und die auch Assaipalme genannt wird. Dieses Getränk umfasst zusätzlich Saft der Früchte Araza und Camu-Camu, bei denen es sich um hervorragende Vitamin C Lieferanten handelt. Araza ist eine Gattung in der Familie der Myrtengewächse (Eugenia Stipitata). Camu Camu ist ebenfalls ein Strauch aus der Familie der Myrtengewächse (Myrciaria Dubia).

Einer direkten Vermarktung dieses Fruchtsafts im Bereich der EU steht als Eintrittshürde die Novel Food Verordnung entgegen, die bislang nicht verbreitete Lebensmittel aus anderen Kulturkreisen, insbesondere auch exotische Früchte betrifft. Für die Vermarktung solcher Produkte ist ein vorgängiges Zulassungsverfahren notwendig.

### Zusammenfassung der Erfindung

Ausgehend von diesem Stand der Technik ist es eine Aufgabe der Erfindung eine Rezeptur anzugeben, bei der ein ähnliches Aromaprofil wie bei dem bekannten Saftprodukt ohne Einsatz der Früchte Camu Camu und Araza möglich ist.

Diese Aufgabe konnte überraschenderweise durch Hinzugabe von zwei anderen Früchten in einer Konzentrationsbreite erreicht werden, wie sie sich aus den beigefügten Ansprüchen ergibt.

Ein Fruchtsaftgetränk auf Basis der Frucht der Euterpe Oleracea umfasst erfindungsgemäss neben den bekannten Saftanteilen Acerolasaft mit 6% bis 10% und Orangensaft mit 3% bis 5% und schafft so ein Aromaprofil, welches einem Fruchtsaft entspricht, der Camu Camu- und Araza-Fruchtanteile aufweist, die im Hinblick auf die Novel Food Verordnung der EU hier nicht enthalten sein sollen.

### Beschreibung eines Ausführungsbeispiels

Die Erfindung wird nachfolgend durch Erläuterung eines Ausführungsbeispiels näher beschrieben.

Die bekannte Rezeptur der Anmelderin verfügt über einen Fruchtsaftgehalt von 42%, der sich auf die Früchte Assai (10,0%), also der Kohlpalme, Camu Camu (8,8%) und Araza (4,0%) sowie auf die weiteren Bestandteile Apfel (8,6%), Birne (4,0%), Limetten (3,8%) und Passionsfrucht (2,8%) bezieht.

Die Erfindung setzt nun folgende Inhaltsstoffe ein:
- Saft der Euterpe Oleracea: 8% bis 12%
- Apfelsaft: 7% bis 10%
- Birnensaft: 3% bis 5%
- Limettensaft: 2.5% bis 4%
- Passionsfruchtsaft: 1.5% bis 4%
- Acerolasaft: 6% und 10%
- Orangensaft: 3% und 5%

Die ersten fünf genannten Inhaltsstoffe sind aus dem Stand der Technik bekannt. Acerola's wissenschaftlicher Name ist Malpighia glabra, früher auch Malpighia punicifolia. In der Zusammenstellung mit einer Hinzufügung von Orangensaft im Bereich von der Hälfte des Zusatzes von Acerolasaft ergibt sich im Geschmack ein vollwertiger Ersatz der Früchte Camu Camu und Araza. Als weiterer Zusatz ist Guarana vorteilhaft, wobei auf einen Koffeingehalt zwischen 50 und 150 mg/l eingestellt wird.

Es ist klar, dass das Fruchtsaftgetränk mit Wasser auf 100% des Getränkes aufgefüllt wird. Die oben genannten Prozentsätze beziehen sich auf die einfache Saftstärke, wobei die Zutaten Fruchtsäfte selber oder Fruchtmark sein können.

Mit den erwähnten Ersatzstoffen ergibt sich ein sehr vergleichbares Aromaprofil, wobei die für die nachhaltige Entwicklung wesentliche Assaifrucht (Frucht der Kohlpalme) nur noch ein Hauptbestandteil des Getränkes ist.

Zusätzlich ist die Zugabe von Zitronensaft im Bereich zwischen 1% und 2% sowie eines Süssstoffs möglich. Hier kann gemäss dem Stand der Technik ein alternativer kalorienarmer Süssstoff oder Zucker, Rohrzucker, Fructose oder Agavendicksaft im Anteil zwischen 4% und 8% hinzugefügt werden. Der Süssstoff oder eine Mischung von Süssstoffen kann aus der Gruppe insbesondere umfassend Aspartam, Acesulfam, Cyclamat oder Saccharin, stammen.

Somit enthält das Tafelgetränk nun ausschliesslich Zutaten, die nicht unter die Novel Food Regelung der EU fallen, erreicht aber ein der ursprünglichen bekannten Rezeptur ähnliches Aromaprofil.

Neben diesem angegebenen Getränk ist es auch möglich, dieses mit Kohlensäure im üblichen, im Stand der Technik bekannten Umfang zu versetzen, um ein kohlensäurehaltiges Getränk zu erstellen.

## Patentansprüche

1. Fruchtsaftgetränk auf Basis der Frucht der Euterpe Oleracea, umfassend, in Prozentsätzen auf die einfache Saftstärke bezogen:
Saft der Euterpe Oleracea 8% bis 12%
Apfelsaft 7% bis 10%
Birnensaft 3% bis 5%
Limettensaft 2.5% bis 5%
Passionsfruchtsaft 1.5% bis 4%
**gekennzeichnet durch** die Hinzufügung von
Acerola 6% bis 10%
Orangensaft 3% bis 5%.

2. Fruchtsaftgetränk nach Anspruch 1, weiterhin umfassend Guarana mit einem Koffeingehalt zwischen 50 und 150 mg/l.

3. Fruchtsaftgetränk nach Anspruch 1 oder 2, weiterhin umfassend Zitronensaft mit einem Anteil zwischen 1% und 2%.

4. Fruchtsaftgetränk nach einem der vorstehenden Ansprüche, **dadurch gekennzeichnet, dass** Zucker oder Rohrzucker, Fructose oder Agavendicksaft mit einem Anteil zwischen 4% und 8% enthalten ist.

5. Fruchtsaftgetränk nach einem der Ansprüche 1 bis 3, ferner umfassend einen Süssstoff oder eine Mischung von Süssstoffen aus der Gruppe insbesondere umfassend Aspartam, Acesulfam, Cyclamat oder Saccharin.

6. Fruchtsaftgetränk nach einem der Ansprüche 1 bis 5, zusätzlich mit Kohlensäure versetzt.
